# FASCICULE DE BREVET EUROPEEN

(11) **EP 4 168 242 B1**
(45) Date de publication et mention de la délivrance du brevet: **14.08.2024**
(21) Numéro de dépôt: 21737727.4
(22) Date de dépôt: 15.06.2021
(51) Int. Cl.: B29C 70/32, B29C 70/54, B29C 53/56, B29C 53/80, B29L 31/00

(54) **FABRICATION D'UN CARTER COMPOSITE POUR TURBOMACHINE D'AERONEF**
HERSTELLUNG EINES VERBUNDGEHÄUSES FÜR EIN FLUGZEUGTURBINENTRIEBWERK
PRODUCTION OF A COMPOSITE CASING FOR AN AIRCRAFT TURBINE ENGINE

(30) Priorité: 19.06.2020 FR 2006427
(43) Date de publication de la demande: 26.04.2023
(73) Titulaire: SAFRAN AIRCRAFT ENGINES, 75015 Paris (FR)
(72) Inventeur: FABRE, Hubert Jean Marie, 77550 MOISSY-CRAMAYEL (FR); GUILLOT, Maxime, 77550 MOISSY-CRAMAYEL (FR)
(74) Mandataire: Gevers & Orès
(86) Numéro de dépôt international: PCT/FR2021/051071
(87) Numéro de publication internationale: WO 2021/255380

(56) Documents cités:
- WO-A1-2013/017796
- US-A1- 2014 302 186

## Description

### Domaine technique de l'invention

L'invention concerne un procédé et une installation de fabrication d'un carter en matériau composite pour une turbomachine d'aéronef.

### Arrière-plan technique

L'état de la technique comprend, notamment, les documents US-A1-2014/302186 et WO-A1 -2013/017796.

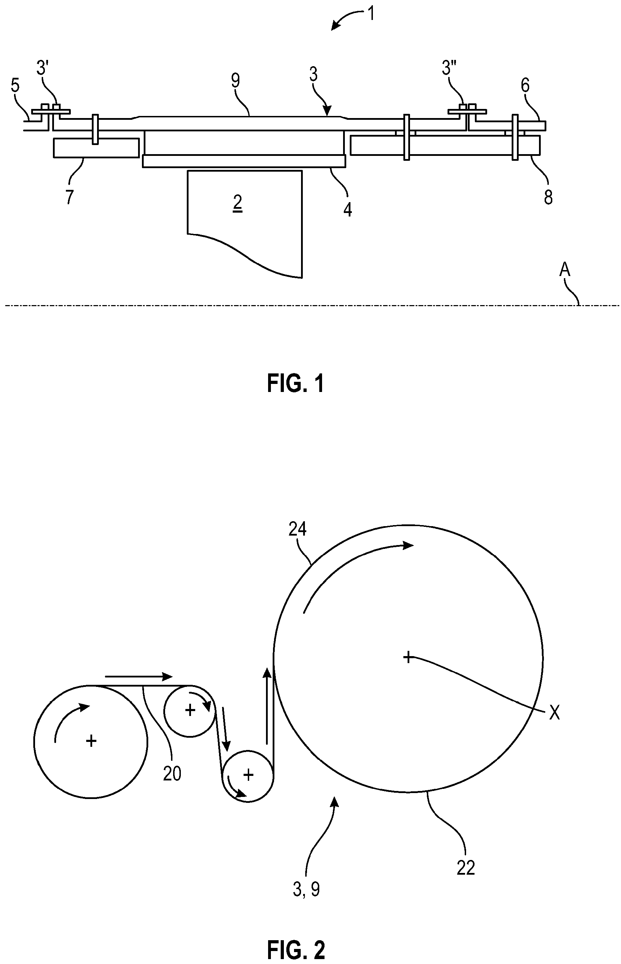

La figure 1 représente partiellement une soufflante 1 d'une turbomachine d'aéronef.

De façon classique, une turbomachine d'aéronef comprend d'amont en aval, c'est-à-dire dans le sens d'écoulement des flux de gaz, une soufflante, un ou plusieurs compresseurs, une chambre de combustion, une ou plusieurs turbines, et une tuyère d'éjection des gaz de combustion sortant de la ou des turbines.

La soufflante 1 comporte une roue à aubes 2 qui est entourée par un carter 3 de soufflante, encore appelé carter de rétention du fait de sa fonction de rétention des aubes en cas de rupture de celles-ci, ou en cas d'entrée de débris dans la soufflante.

Le carter de soufflante 3 comprend typiquement une enveloppe annulaire 9 d'axe de révolution A qui s'étend autour des aubes de soufflante 2 de la turbomachine. Cette enveloppe comprend une bride annulaire de fixation 3', 3" à chacune de ses extrémités axiales. Ces brides 3', 3" sont utilisées pour fixer le carter 3 à des parois annulaires de la nacelle de la turbomachine.

Le carter de soufflante 3 est en effet lié, à l'amont, à une manche d'entrée d'air 5, et, à l'aval, à une virole 6 de carter intermédiaire. Le carter porte également des panneaux acoustiques amont 7 et des panneaux acoustiques aval 8. Le carter de soufflante 3 comporte encore une couche annulaire 4 de matière abradable, positionnée sur une surface annulaire interne de l'enveloppe 9, entre les panneaux amont 7 et les panneaux aval 8.

En plus de la fonction de rétention, le carter de soufflante 3 est également conçu pour :
- assurer la continuité de la veine aérodynamique par l'intermédiaire de la couche annulaire en matériau abradable ;
- assurer une continuité mécanique (des efforts et des moments) entre la manche d'entrée d'air 5 et la virole 6 de carter intermédiaire ;
- permettre la fixation des panneaux 7, 8 et de la couche 4,
- permettre la fixation d'équipements et supports connus en soi ;
- tenir les spécifications de règlementation au feu et aux fuites ;
- permettre une continuité du courant électrique pour la tenue à la foudre, etc. De façon connue, l'enveloppe 9 ou le carter 3 peut être en matériau composite. Le carter 3 comporte alors une préforme 24 tissée, sous la forme d'une bande ou tissu ou toile 20 enroulée, et une résine dans laquelle la préforme est noyée. Le carter 3 peut alors être conçu par enroulement de la toile 20 en matière tissée autour d'un tambour 22, appelé tambour de moulage qui sert après enroulement à la formation du carter par injection-moulage (cf. figure 2). La préforme est ainsi mise en forme autour du tambour 22, pour former un ou plusieurs tours de toile autour du tambour. Le moule est ensuite refermé en vue de l'injection d'une résine d'imprégnation de la préforme.

La définition d'un carter en matériau composite définit une tolérance quant au taux volumique de fibres (TVF) à respecter dans la pièce dans le but de garantir les propriétés du matériau, une bonne imprégnation et une bonne cohésion des fibres. Un TVF trop important peut être à l'origine d'une porosité indésirable ainsi que d'une mauvaise imprégnation, qui peuvent provoquer une mauvaise cohésion des fibres et une dégradation des propriétés du matériau.

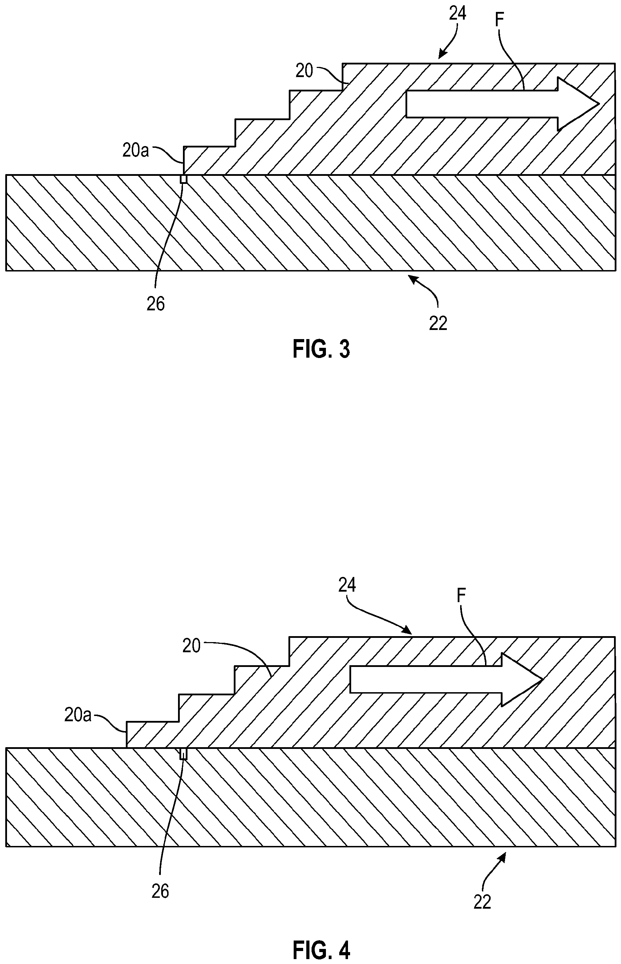

L'enroulement de la toile 20 autour du tambour 22 est délicat à effectuer et peut avoir un impact sur le TVF. C'est en particulier le cas au début de l'enroulement de la toile 20, lorsque le bord 20a d'une extrémité longitudinale de la toile 20 est positionné sur le tambour 22. Dans la technique actuelle, le tambour 22 comprend une marque 26 et un opérateur doit aligner le bord 20a de la toile 20 sur cette marque 26 (cf. figure 3). Cependant, ce positionnement n'est pas simple à réaliser et, même s'il est correctement réalisé, le bord 20a de la toile 20 risque de bouger lors de l'enroulement. Cette marque 26 est destinée à être située au droit de la préforme 24. Dans le cas où le bord 20a de la toile 20 serait mal positionné par rapport à cette marque 26 qui serait recouverte et cachée par la toile 20, il ne serait pas possible d'identifier et de mesurer ce mauvais positionnement de la préforme 24 (cf. figure 4). Si la préforme 24 glisse lors de l'enroulement, ce glissement s'effectuera dans le sens d'enroulement F et la marque 26 sera davantage visible. Dans les différents cas, il est difficile de mesurer cet éventuel désalignement. En effet, même lorsque la préforme 24 est correctement positionnée sur le tambour 20, la marque 26 est en grande partie cachée par la préforme 24 et donc difficile à repérer.

L'opérateur n'a donc pas la possibilité de se rendre compte à quel point la préforme 24 est désalignée et s'il aurait intérêt ou non à la repositionner. L'opérateur se rend ensuite compte de l'ampleur du désalignement au démoulage et à l'inspection finale de la pièce, c'est-à-dire trop tard pour le corriger. Un désalignement qui mène à un recouvrement de la marque par la toile se traduit par une augmentation du TVF qui risque d'être supérieur au seuil supérieur de tolérance dans cette zone. Au contraire, un désalignement du fait d'un glissement de la préforme dans le sens d'enroulement se traduit par une diminution du TVF, ce qui a également un impact sur les propriétés matériaux.

L'invention vise ainsi à proposer une solution simple, efficace et économique, qui permette de résoudre ce problème et de faciliter et garantir le positionnement de la toile et de la préforme au début de son enroulement.

### Résumé de l'invention

L'invention concerne un procédé de fabrication d'un carter en matériau composite pour une turbomachine d'aéronef, ce carter ayant une forme annulaire et comportant une préforme fibreuse annulaire formée par enroulement d'une toile fibreuse et noyée dans une matrice polymérique, le procédé comprenant les étapes de :
a) positionnement d'un bord de la toile sur un tambour de moulage, cette toile ayant une forme générale allongée et ledit bord étant situé à une première extrémité longitudinale de la toile,
b) enroulement de la toile sur le tambour, sur au moins un tour, de manière à obtenir la préforme enroulée autour du tambour,
c) moulage de la préforme et durcissement de la résine qui est injectée dans la préforme ou préimprégnée sur la préforme,
caractérisé en ce qu'il comprend, avant l'étape a), une étape i) de montage d'une butée amovible sur le tambour, et en ce que l'étape a) comprend la mise en butée dudit bord contre cette butée.

L'invention propose ainsi de faciliter le positionnement du bord de la toile formant la préforme par l'intermédiaire d'une butée amovible. Après avoir correctement positionnée la butée sur le tambour, il suffit donc à l'opérateur d'appliquer le bord de la toile contre cette butée pour positionner correctement la toile sur le tambour. L'opérateur peut alors poursuivre le procédé avec l'enroulement de la toile autour du tambour, tout en s'assurant, par exemple visuellement, que le bord de la toile est toujours en appui contre la butée. Le butée est ensuite retirée lorsqu'elle n'est plus utile et en particulier si la toile doit être enroulée sur elle-même et sur plus d'un tour sur le tambour.

Le procédé selon l'invention peut comprendre une ou plusieurs des caractéristiques ou étapes suivantes, considérées indépendamment les unes des autres ou en combinaison les unes avec les autres :
- le procédé comprend, pendant l'étape b), une étape ii) de démontage et retrait de la butée vis-à-vis du moule ;
- le tambour comprend une paroi cylindrique s'étendant entre deux brides annulaires, la butée étant positionnée sur la paroi cylindrique et fixée de manière amovible auxdites brides à l'étape i) ;
- la butée comprenant des repères visuels configurés pour être détectés par une caméra vidéo, le procédé comprend, après l'étape i), une étape iii) de calibrage de caméras de surveillance de l'enroulement par détection de ces repères ;
- la butée comprenant un guide de coupe, le procédé comprend, à la fin de l'étape b), une étape iv) de découpe d'une seconde extrémité longitudinale opposée du tissu ;
- la butée est réalisée en métal, plastique, bois ou composite ;
- la butée est montée à l'étape i) de façon à ce que ledit bord du tissu puisse être aligné avec une marque situé sur le tambour ;
- la marque est une gravure.

La divulgation porte également sur une installation qui ne fait pas partie de la protection demandée, pour la mise en oeuvre d'un procédé tel que décrit ci-dessus, cette installation comportant :
- le tambour de moulage s'étendant autour d'un axe longitudinal X et comportant une paroi cylindrique et une marque, la paroi cylindrique s'étendant entre deux bides annulaires et une marque, et
- la butée positionnée sur la paroi cylindrique et fixée de façon amovible sur les brides annulaires du tambour, cette butée étant positionnée au niveau de la marque et en appui contre un bord d'une toile fibreuse.

L'invention porte en outre sur un ensemble comportant une installation pour la mise en oeuvre d'un procédé tel que décrit ci-dessus, et une toile fibreuse, cette installation comportant :
- le tambour de moulage s'étendant autour d'un axe longitudinal X et comportant une paroi cylindrique et une marque, la paroi cylindrique s'étendant entre deux bides annulaires, et
- la butée positionnée sur la paroi cylindrique et fixée de façon amovible sur les brides annulaires du tambour, cette butée étant positionnée au niveau de la marque et en appui contre un bord de la toile fibreuse.

La butée peut être en appui contre le bord selon une direction circonférentielle du tambour (par rapport à l'axe X).

La butée peut être réalisée en métal, plastique, bois ou composite.

La butée peut comprendre des repères visuels configurés pour être détectés par une caméra vidéo, et/ou un guide de coupe configuré pour découper une seconde extrémité longitudinale opposée de la toile et de la préforme.

### Brève description des figures

D'autres caractéristiques et avantages de l'invention apparaîtront au cours de la lecture de la description détaillée qui va suivre pour la compréhension de laquelle on se reportera aux dessins annexés dans lesquels :
[Fig.1] La figure 1 déjà discutée montre une vue partielle en coupe d'une soufflante de turbomachine d'aéronef selon l'état de la technique ;
[Fig.2] La figure 2 également déjà mentionnée illustre schématiquement une installation pour la fabrication d'un carter composite du type de celui illustré à la figure 1 ;
[Fig.3] La figure 3 déjà discutée également est une vue très schématique en coupe d'une toile en cours d'enroulement sur un tambour de moulage de l'installation de la figure 2 ;
[Fig.4] La figure 4 déjà discutée est une vue similaire à celle de la figure 3 et représente un problème de positionnement de la préforme sur le tambour ; [Fig.5] La figure 5 est un organigramme illustrant des étapes d'un procédé de fabrication d'un carter composite selon l'invention,
[Fig.6] La figure 6 est une vue similaire à celles des figures 3 et 4 et illustre une étape du procédé dans laquelle une butée est positionnée sur le tambour pour garantir un bon positionnement de la toile et de la préforme lors de son enroulement sur le tambour ;
[Fig.7] La figure 7 est une vue en perspective d'une partie d'une installation de mise en oeuvre du procédé selon l'invention, et
[Fig.8] La figure 8 est une vue similaire à celle de la figure 6 et illustre la butée et un bord de la toile positionnés au niveau d'une marque du tambour.

### Description détaillée de l'invention

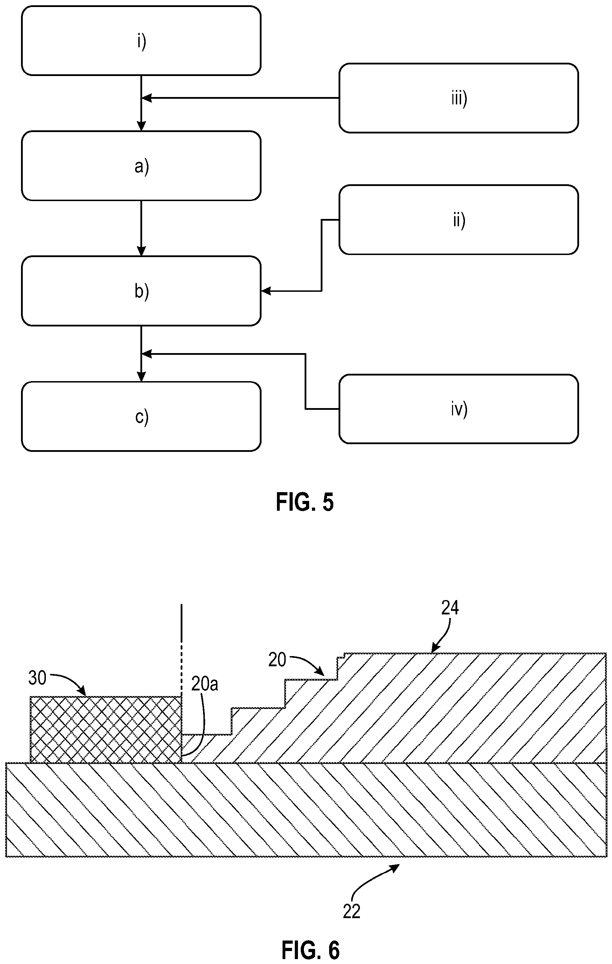

La figure 5 illustre des étapes d'un procédé de fabrication d'un carter 3 en matériau composite pour une turbomachine d'aéronef, tel que celui représenté à la figure 1.

Ce procédé comprend pour l'essentiel quatre étapes, à savoir :
i) le montage d'une butée 30 amovible sur un tambour de moulage 22, comme cela est visible à la figure 6,
   a) le positionnement d'un bord 20a d'une toile fibreuse 20 sur le tambour 20, ce positionnement étant réalisé par la mise en butée de ce bord 20a contre la butée 30,
   b) l'enroulement de la toile 20 sur le tambour 22 sur au moins un tour, de manière à obtenir une préforme annulaire 24 autour du tambour (cf. figure 2), et
   c) le moulage de la préforme 24 et le durcissement de la résine qui est injectée dans la préforme ou préimprégnée sur la préforme.

La toile 20 a une forme générale allongée. Le bord 20a qui est appliqué contre la butée 30 est situé à une des extrémités longitudinales de la toile 20. Dans le cas où la toile 20 aurait une forme générale rectangulaire et allongée, le bord 20a en question serait un bord qui s'étend sensiblement perpendiculairement aux bords longitudinaux ou latéraux de la toile 20.

La butée 30 permet de faciliter le positionnement du bord 20a de la toile 20 lorsque l'enroulement de cette dernière est initié autour du tambour 22.

La butée 30 est amovible et destinée à être démontée et retirée du tambour 22 à une étape ii) qui peut intervenir par exemple pendant l'étape b) (cf. figure 5).

Le retrait de la butée 30 intervient à un moment qui dépend notamment si la butée 30 a d'autres fonctions que le positionnement de la préforme 24 au démarrage de l'enroulement. Dans tous les cas, la butée devrait normalement être retirée avant la fin du premier tour d'enroulement afin de poursuivre l'enroulement en recouvrant le bord 20a de la toile 20.

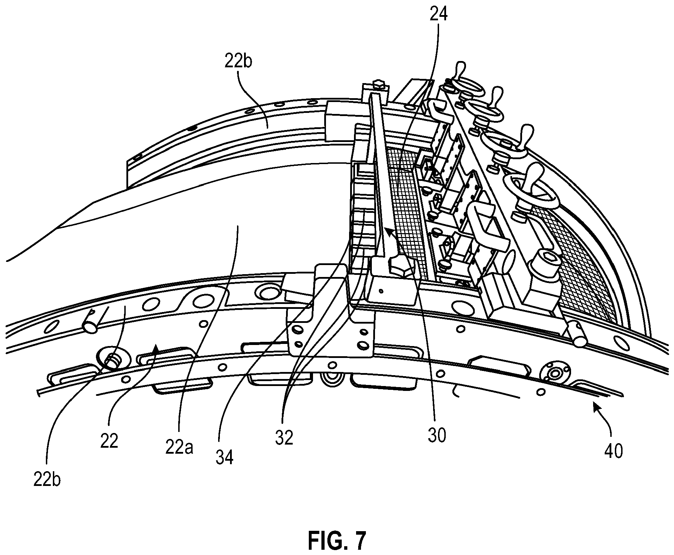

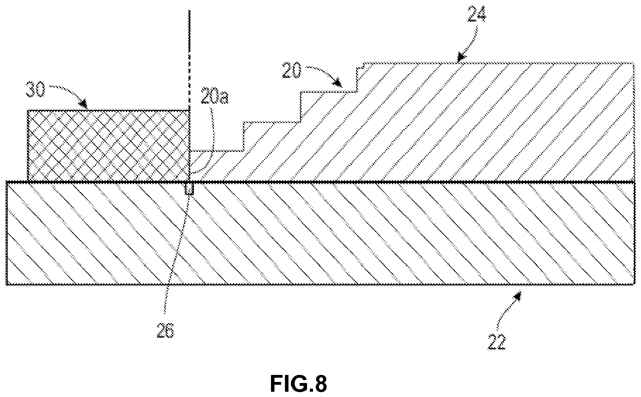

Les figures 7 et 8 illustrent un mode de réalisation d'un ensemble comportant une installation 40 pour la mise en oeuvre du procédé de l'invention, et la toile fibreuse 20.

Sur la figure 7 l'installation 40 comprend le tambour 22 et la butée 30.

Le tambour 22 s'étend autour d'un axe longitudinal X (figure 2). Cet axe X correspond sensiblement à l'axe A de révolution de l'enveloppe annulaire 9 du carter à former. La toile fibreuse 20 est adaptée à s'enrouler sur toute la circonférence du tambour 22.

La figure 7 permet de voir que le tambour 22 comprend une paroi cylindrique 22a s'étendant entre deux brides annulaires 22b, la butée 30 étant positionnée sur la paroi cylindrique 22a et fixée de manière amovible aux brides 22b.

En référence à la figure 8, le bord 20a de la toile fibreuse 20 et la butée 30 sont situés au niveau de la marque 26 du tambour 22.

Avantageusement, cette butée 30 est en appui contre le bord 20a suivant une direction circonférentielle à l'axe X du tambour 22. Dit autrement, le bord 20a est en appui contre toute la largeur d'une face d'appui de la butée 30 dans la direction circonférentielle du tambour 2.

Dans le cas où la butée 30 aurait une ou plusieurs autres fonctions, elle comprendrait alors :
- des repères visuels 32 configurés pour être détectés par une caméra vidéo, le procédé comprendrait dans ce cas, après l'étape i), une étape iii) de calibrage de caméras de surveillance de l'enroulement par détection de ces repères 32 (cf. figure 5) ; et/ou
- un guide de coupe 34, le procédé comprendrait dans ce cas, à la fin de l'étape b), une étape iv) de découpe d'une seconde extrémité longitudinale opposée de la toile et de la préforme (cf. figure 5).

La butée 30 peut être métallique ou plastique et pourrait être réalisée par fabrication additive.

## Revendications

1. Procédé de fabrication d'un carter (3) en matériau composite pour une turbomachine d'aéronef, ce carter ayant une forme annulaire et comportant une préforme (24) fibreuse annulaire formée par enroulement d'une toile (20) fibreuse et noyée dans une matrice polymérique, le procédé comprenant les étapes de :
a) positionnement d'un bord (20a) de la toile (20) sur un tambour de moulage (22), cette toile ayant une forme générale allongée et ledit bord étant situé à une première extrémité longitudinale de la toile,
b) enroulement de la toile (20) sur le tambour (22), sur au moins un tour, de manière à obtenir la préforme (24) enroulée autour du tambour,
c) moulage de la préforme et durcissement de la résine qui est injectée dans la préforme ou préimprégnée sur la préforme,
**caractérisé en ce qu'**il comprend, avant l'étape a), une étape i) de montage d'une butée (30) amovible sur le tambour (22), et **en ce que** l'étape a) comprend la mise en butée dudit bord (20a) contre cette butée (30).

2. Procédé selon la revendication 1, dans lequel il comprend, pendant l'étape b), une étape ii) de démontage et retrait de la butée (30) vis-à-vis du moule.

3. Procédé selon la revendication 1 ou 2, dans lequel le tambour (22) comprend une paroi cylindrique (22a) s'étendant entre deux brides annulaires (22b), la butée (30) étant positionnée sur la paroi cylindrique (22a) et fixée de manière amovible auxdites brides (22b) à l'étape i).

4. Procédé selon l'une des revendications précédentes, dans lequel, la butée (30) comprenant des repères visuels (32) configurés pour être détectés par une caméra vidéo, le procédé comprend, après l'étape i), une étape iii) de calibrage de caméras de surveillance de l'enroulement par détection de ces repères (32).

5. Procédé selon l'une des revendications précédentes, dans lequel, la butée (30) comprenant un guide de coupe (34), le procédé comprend, à la fin de l'étape b), une étape iv) de découpe d'une seconde extrémité longitudinale opposée du tissu.

6. Procédé selon l'une des revendications précédentes, dans lequel la butée (30) est réalisée en métal, plastique, bois ou composite.

7. Procédé selon l'une des revendications précédentes, dans lequel la butée (30) est montée à l'étape i) de façon à ce que ledit bord (20a) de la toile (20) puisse être aligné avec une marque (26) située sur le tambour (22).

8. Procédé selon la revendication précédente, dans lequel la marque (26) est une gravure.

9. Ensemble comportant une installation (40) pour la mise en oeuvre d'un procédé selon l'une des revendications précédentes, et une toile fibreuse (20), cette installation (40) comportant :
- le tambour de moulage (22) s'étendant autour d'un axe longitudinal (X) et comportant une paroi cylindrique (22a) et une marque (26), la paroi cylindrique s'étendant entre deux brides annulaires (22b), et
- la butée (30) positionnée sur la paroi cylindrique (22a) et fixée de façon amovible sur les brides annulaires (22b) du tambour (22), cette butée (30) étant positionnée au niveau de la marque (26) et en appui contre un bord (20a) de la toile fibreuse (20).

10. Ensemble selon la revendication précédente, dans lequel la butée (30) est en appui contre le bord (20a) selon une direction circonférentielle du tambour (22).

11. Ensemble selon la revendication 9 ou 10, dans lequel la butée (30) est réalisée en métal, plastique, bois ou composite.

12. Ensemble selon l'une des revendications 9 à 11, dans lequel la butée (30) comprend des repères visuels (32) configurés pour être détectés par une caméra vidéo.

13. Ensemble selon l'une des revendications 9 à 12, dans lequel la butée (30) comprend un guide de coupe (34).

## Patentansprüche

1. Verfahren zur Herstellung eines Gehäuses (3) aus Verbundmaterial für einer Turbomaschine eines Flugzeugs, wobei dieses Gehäuse eine ringförmige Form aufweist und eine ringförmige faserige Vorform (24) umfasst, die durch Aufwicklung einer faserigen und in eine Polymermatrix getauchten Bahn (20) gebildet wird, wobei das Verfahren die folgenden Schritte umfasst:
a) Positionierung eines Randes (20a) der Bahn (20) auf eine Formgusstrommel (22), wobei diese Bahn eine allgemeine längliche Form aufweist und der Rand an einem ersten Längsende der Bahn gelegen ist,
b) Aufwicklung der Bahn (20) auf die Trommel (22) über mindestens eine Umdrehung, um die um die Trommel aufgewickelte Vorform (24) erhalten,
c) Gießen der Vorform und Aushärtung des Harzes, das in die Vorform eingespritzt ist oder vorab auf die Vorform imprägniert wurde,
**dadurch gekennzeichnet, dass** es vor dem Schritt a) einen Schritt i) des Anbringens eines abnehmbaren Anschlags (30) an der Trommel (22) umfasst, und dass der Schritt a) das Bringen des Randes (20a) an diesen Anschlag (30) umfasst.

2. Verfahren nach Anspruch 1, wobei es während des Schritts b) einen Schritt ii) des Abnehmens und der Entnahme des Anschlags (30) gegenüber der Gussform umfasst.

3. Verfahren nach Anschlag 1 oder 2, wobei die Trommel (22) eine zylindrische Wand (22a) umfasst, die sich zwischen zwei ringförmigen Flanschen (22b) erstreckt, wobei im Schritt i) der Anschlag (30) auf der zylindrischen Wand (22a) positioniert und auf abnehmbare Weise an den Flanschen (22b) befestigt wird.

4. Verfahren nach einem der vorstehenden Ansprüche, wobei der Anschlag (30) optische Markierungen (32) umfasst, die konfiguriert sind, um von einer Videokamera erfasst zu werden, wobei das Verfahren nach dem Schritt i) einen Schritt iii) der Kalibrierung von Überwachungskameras der Aufwicklung durch Erfassung dieser Markierungen (32) umfasst.

5. Verfahren nach einem der vorstehenden Ansprüche, wobei der Anschlag (30) eine Schnittführung (34) umfasst, wobei das Verfahren am Ende von Schritt b) einen Schritt iv) des Zuschneidens eines gegenüberliegenden zweiten Längsendes des Gewebes umfasst.

6. Verfahren nach einem der vorstehenden Ansprüche, wobei der Anschlag (30) aus Metall, Kunststoff, Holz oder Verbundwerkstoff gefertigt ist.

7. Verfahren nach einem der vorstehenden Ansprüche, wobei der Anschlag (30) im Schritt i) derart angebracht wird, dass der Rand (20a) der Bahn (20) mit einem auf der Trommel (22) gelegenen Zeichen (26) ausgerichtet werden kann.

8. Verfahren nach dem vorstehenden Anspruch, wobei das Zeichen (26) eine Gravur ist.

9. Montage, umfassend eine Anlage (40) zur Durchführung eines Verfahrens nach einem der vorstehenden Ansprüche und eine faserige Bahn (20), wobei diese Anlage (40) umfasst:
- die Formgusstrommel (22), die sich um eine Längsachse (X) erstreckt und eine zylindrische Wand (22a) und ein Zeichen (26) umfasst, wobei sich die zylindrische Wand zwischen zwei ringförmigen Flanschen (22b) erstreckt, und
- den Anschlag (30), der auf der zylindrischen Wand (22a) positioniert und auf abnehmbare Weise an den ringförmigen Flanschen (22b) der Trommel (22) befestigt ist, wobei dieser Anschlag (30) am Zeichen (26) und anliegend an einem Rand (20a) der faserigen Bahn (20) positioniert ist.

10. Montage nach dem vorstehenden Anspruch, wobei der Anschlag (30) in einer Umfangsrichtung der Trommel (22) an dem Rand (20a) anliegt.

11. Montage nach Anspruch 9 oder 10, wobei der Anschlag (30) aus Metall, Kunststoff, Holz oder Verbundwerkstoff gefertigt ist.

12. Montage nach der Ansprüche 9 bis 11, wobei der Anschlag (30) optische Markierungen (32) umfasst, die konfiguriert sind, um von einer Videokamera erfasst zu werden.

13. Montage nach der Ansprüche 9 bis 12, wobei der Anschlag (30) eine Schnittführung (34) umfasst.

## Claims

1. A method for producing a casing (3) made of a composite material for an aircraft turbine engine, this casing having an annular shape and comprising an annular fibrous preform (24) formed by winding a fibrous cloth (20) and embedded in a polymer matrix, the method comprising the steps of:
a) positioning an edge (20a) of the cloth (20) on a moulding drum (22), the cloth having a generally elongate shape and said edge being located at a first longitudinal end of the cloth,
b) winding the cloth (20) on the drum (22) over at least one turn so as to obtain the preform (24) wound around the drum,
c) moulding the preform and hardening the resin which is injected into the preform or pre-impregnated on the preform,
**characterised in that** it comprises, before step a), a step i) of mounting a removable abutment (30) on the drum (22), and **in that** step a) comprises abutting said edge (20a) against this abutment (30).

2. The method according to claim 1, wherein it comprises, during step b), a step ii) of dismounting and removing the abutment (30) from the mould.

3. The method according to claim 1 or 2, wherein the drum (22) comprises a cylindrical wall (22a) extending between two annular flanges (22b), the abutment (30) being positioned on the cylindrical wall (22a) and removably attached to said flanges (22b) in step i).

4. The method according to one of the preceding claims, wherein, the abutment (30) comprising visual markers (32) configured to be detected by a video camera, the method comprises, after step i), a step iii) of calibrating monitoring cameras of the winding by detecting these markers (32).

5. The method according to one of the preceding claims, wherein, the abutment (30) comprising a cutting guide (34), the method comprises, at the end of step b), a step iv) of cutting a second longitudinal end opposite of the fabric.

6. The method according to one of the preceding claims, wherein the abutment (30) is made of metal, plastic, wood or composite.

7. The method according to one of the preceding claims, wherein the abutment (30) is mounted in step i) so that said edge (20a) of the cloth (20) can be aligned with a mark (26) located on the drum (22).

8. The method according to the preceding claim, wherein the mark (26) is an engraving.

9. An assembly comprising an installation (40) for carrying out a method according to one of the preceding claims, and a fibrous cloth (20), this installation (40) comprising:
- the moulding drum (22) extending around a longitudinal axis (X) and comprising a cylindrical wall (22a) and a mark (26), the cylindrical wall extending between two annular flanges (22b), and
- the abutment (30) positioned on the cylindrical wall (22a) and removably attached to the annular flanges (22b) of the drum (22), this abutment (30) being positioned at the mark (26) and resting against an edge (20a) of the fibrous cloth (20).

10. The assembly according to the preceding claim, wherein the abutment (30) resting against the edge (20a) along a circumferential direction of the drum (22).

11. The assembly according to claim 9 or 10, wherein the abutment (30) is made of metal, plastic, wood or composite.

12. The assembly according to one of claims 9 to 11, wherein the abutment (30) comprises visual markers (32) configured to be detected by a video camera.

13. The assembly of any of claims 9 to 12, wherein the abutment (30) comprises a cutting guide (34).
